# EUROPEAN PATENT APPLICATION

(11) **EP 4 664 930 A1**
(43) Date of publication of application: **17.12.2025**
(21) Application number: 24182363.2
(22) Date of filing: 14.06.2024
(51) Int. Cl.: H04R 25/00, G06N 3/045, G06N 3/063

(54) **HEARING DEVICE WITH WEIGHT ENCODING**

(71) Applicant: GN Hearing A/S, 2750 Ballerup (DK)
(72) Inventor: PEDERSEN, Brian Dam, DK-2750 Ballerup (DK)
(74) Representative: Aera A/S

(57) **Abstract**

A hearing device is disclosed. The hearing device comprises a set of input transducers for provision of transducer input data, the set of input transducers comprising a first input transducer for provision of a first transducer input signal as part of the transducer input data. The hearing device comprises a processor for processing transducer input data and providing an electrical output signal based on the transducer input data. The hearing device comprises a receiver for converting the electrical output signal to an audio output signal. The hearing device comprises a memory having stored thereon a weight representation indicative of a weight of a plurality of weights of a neural network based on the transducer input data.

## Description

The present disclosure relates to a hearing device and related methods including a method of operating a hearing device. In particular, hearing devices and methods with neural network processing of transducer input data, e.g. microphone input data, are presented.

### BACKGROUND

Hearing devices implementing machine learning and deep neural networks (DNNs) attract increased attention, however DNNs are computationally costly and can potentially negatively impact the efficiency of a hearing device.

### SUMMARY

Accordingly, there is a need for hearing devices and methods with improved implementation of DNNs.

A hearing device is disclosed. The hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data.

The hearing device comprises a receiver for converting the electrical output signal to an audio output signal. The hearing device comprises a memory having stored thereon a weight representation indicative of a weight of a plurality of weights of a neural network based on the transducer input data. Optionally, the weight representation comprises an index parameter associated with a weight data structure. Optionally, the index parameter is represented by J-bits. The processor is configured to retrieve, based on the index parameter, the weight from the weight data structure. The weight is represented by N-bits.

N is larger than J. J and N are positive integers.

A method is provided. The method for providing a weight representation to process transducer input of a hearing device is disclosed. The method is performed by an electronic device. The method comprises obtaining a weight of N-bits. The method comprises generating, based on the weight, a weight representation indicative of weights of a neural network based on transducer input data. The weight representation comprises an index parameter of J bits. In one or more examples, N is larger than J. Optionally, the method comprises storing, in a weight data structure, the index parameter with the weight.

It is an advantage of the present disclosure that the hearing device provides improved efficiency of processing of the transducer input data obtained by the hearing device. For example, power and memory efficient computing or processing is enabled by improving compute bandwidth by quantizing the weights to 4 bits in a manner that is not detrimental but rather beneficial to overall performance of the processor in the hearing device. For example, while 4-bit uniform quantization may be detrimental to performance of the network, 4-bit non-uniform quantization, like the method disclosed herein, can provide improved compute bandwidth without negatively impacting network performance.

It is an advantage of the present disclosure that the hearing device provides compact representation of data for weights of a neural network, for examples, a DNN. In a device such as a hearing aid, when carrying out machine learning processes, space is often a highly limited resource and data for the weighting of the neural network can be vast and contain huge quantities of data. Thus, a compact representation for data storage and recall is a significant advantage.

### BRIEF DESCRIPTION OF THE DRAWINGS

The above and other features and advantages of the present invention will become readily apparent to those skilled in the art by the following detailed description of example embodiments thereof with reference to the attached drawings, in which:
Fig. 1 schematically illustrates an example hearing system according to this disclosure,
Fig. 2 is a flowchart of an example according to this disclosure,
Fig. 3 is a flowchart of an example according to this disclosure,
Fig. 4 schematically illustrates an example hearing device according to the disclosure, and
Fig. 5 schematically illustrates example weight matrices, according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing device is disclosed. The hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data.

The hearing device comprises a receiver for converting the electrical output signal to an audio output signal. The hearing device comprises a memory. In one or more examples, the memory has stored thereon a weight representation. In one or more examples, the weight representation is indicative of a weight of a plurality of weights of a neural network. In one or more examples, the weights of the neural network are based on the transducer input data. Optionally, the weight representation comprises an index parameter associated with a weight data structure. Optionally, the index parameter is represented by J-bits. The processor is configured to retrieve, based on the index parameter, the weight from the weight data structure. In one or more examples, the weight is represented by N-bits where N is larger than J. J and N are positive integers.

The hearing device may be configured to be worn at an ear of a user and may be a hearable or a hearing aid, wherein the processor is configured to compensate for a hearing loss of a user.

In some examples, the hearing device may be an earbud, a headphone, or a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices.

The hearing device/transceiver module optionally comprises a radio transceiver coupled to the antenna for converting the antenna output signal to a transceiver input signal/transceiver input data. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device comprises a set of transducers, such as microphones. The set of transducers may comprise one or more transducers, e.g., one or more microphones. The set of transducers comprises a first transducer, such as a first microphone, for provision of a first transducer input signal and/or a second transducer, such as a second microphone, for provision of a second transducer input signal. The set of transducers may comprise J transducers for provision of J transducer signals, wherein J is an integer in the range from 1 to 10. In one or more exemplary hearing devices, the number J of transducers is two, three, four, five or more. The set of transducers may comprise a third transducer, such as a third microphone, for provision of a third transducer input signal.

The hearing device comprises a processor for processing input data/input signals, such as transceiver input signal(s)/data and/or microphone input data/signal(s). The processor is optionally configured to compensate for hearing loss of a user of the hearing device. The processor provides an electrical output signal based on the input data/input signals to the processor. For example, a transceiver input terminal of the processor may be connected to a transceiver for receiving transceiver input signal. One or more transducer input terminals of the processor may be connected to respective one or more transducers of the set of transducers.

The hearing device, such as the processor, optionally comprises a pre-processor for provision of the network input to the neural network based on the transducer input data. The pre-processor may be connected to the radio transceiver for provision of the network input to the network based on the transceiver input signal. In one or more examples, the pre-processor may be configured to transform the transducer input data, such as microphone input data, and/or transceiver input data to the network input, e.g. by a conversion from a data type to the first data type, frequency transformation, log operations, or combinations thereof.

It is noted that descriptions and features of hearing device functionality, such as hearing device configured to access weight representations of neural network, also apply to methods and vice versa. For example, a description of a hearing device configured to determine also applies to a method, e.g. of operating a hearing device, wherein the method comprises determining and vice versa

The hearing device comprises a processor for processing transducer input data, such as microphone input data, and providing an electrical output signal based on the transducer input data, such as the microphone input data. The processor may be configured to apply a neural network to a network input for provision of a network output, the network input based on the transducer input data, such as the microphone input data, for example based on the first transducer input signal and/or the second transducer input signal. The electrical output signal is based on, e.g. being a function of the network output. The network input and/or the transducer input data, such as the microphone input data, has a first data type. Parameters, such as weights, of the neural network may have a second data type different from the first data type of the network input/transducer input data. The hearing device comprises a receiver for converting the electrical output signal to an audio output signal.

The first transducer input signal can for example be a first microphone input signal from a first microphone. The second transducer input signal can for example be a second microphone input signal from a second microphone. In other words, the first microphone input signal may constitute the first transducer input signal and/or the second microphone input signal may constitute the second transducer input signal. The transducer input data, such as microphone input data, may be pre-processed, e.g. in a pre-processor external to or integrated in the processor, before being fed as network input to the neural network.

The processor may for example be configured to obtain, e.g., from or via the set of input transducers, the transducer input data. In other words, the processor may for example be configured to receive and/or retrieve, e.g., from or via the set of input transducers, the transducer input data.

The processor may for example be configured to generate, e.g., based on the transducer input data, an electrical output signal. For example, the processor may be configured to generate the electrical output signal, e.g., including to apply the neural network to the network input based on the transducer input data and/or transceiver input data.

The electrical output signal is for example an electrical output signal of the processor. The electrical output signal can for example be seen as an electrical signal provided by the processor as an output.

The receiver is for example configured to obtain, e.g., receive and/or retrieve the electrical output signal, such as from the processor. The receiver is for example configured to determine, such as generate the audio output signal, e.g., based on the electronic output signal. In some examples, the receiver is configured to provide, such as output, the audio output signal.

In one or more example hearing devices, the first input transducer is a first microphone for provision of a first microphone input signal as the first transducer input signal. The first input transducer may be an antenna, such as MI coil or BT antenna, for provision of a wirelessly received audio signal as the first transducer input signal. The first input transducer may be a vibration sensor for provision of a vibration input signal as the first transducer input signal. The vibration sensor is optionally configured for receiving body conducted signal from ear canal.

In one or more example hearing devices, the set of input transducers comprises a second input transducer, such as a second microphone, for provision of a second transducer input signal, such as a second microphone input signal, as part of the transducer input data.

For example, the transducer input signal may comprise a first transducer input signal and/or a second transducer input signal, the first transducer input signal being provided by a first input transducer of the set of input transducers and the second transducer input signal being provided by the second input transducer of the set of input transducers.

In one or more examples, the hearing device comprises a memory having stored thereon a weight representation. The weight representation is indicative of weights of a neural network disclosed herein. For example, the neural network is based on the transducer input data disclosed herein. Weights are for example applied by the neural network in that the weights are applied to a network input based on the transducer input data for provision of a network output. The weights may be seen as parameters of the neural network that are associated with a connection between two nodes of the neural network, e.g. across various layers of the neural network and that are indicative of relation between the two nodes. Weights are representative for example of the relations between network input features and network output.

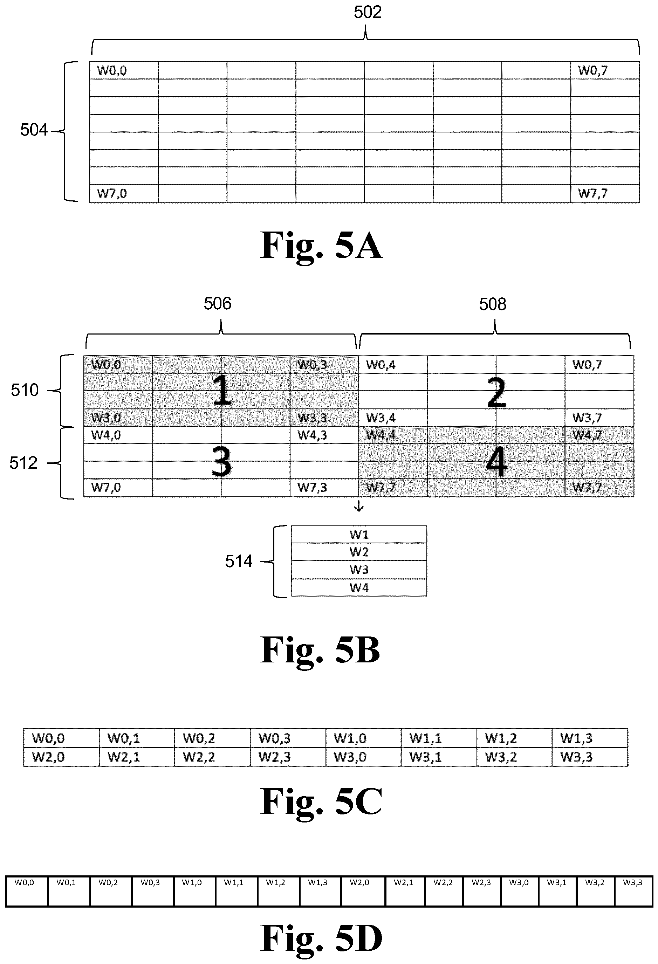

A weight representation can be seen as a representation of the weights of the neural network, such as a vector representation and/or a matrix representation. A weight representation may be seen as a vector or matrix, for example, a matrix as depicted at Fig. 5. A weight of a plurality of weights may be seen, as described herein, as indicative of the strength of a connection between two or more nodes of the neural network. In one or more examples, transducer input data may be seen according to definitions herein, for example, data received from a transducer, for example, a microphone, that may be used as input into the neural network, for example, network input.

The neural network may for example be configured to take the transducer input data and/or pre-processed transducer input data as network input, where the transducer input data for example has a first data type. The output of the neural network for example comprises the network output. The network output can for example be seen as an output of the neural network. The network output is for example based on the network input/transducer input data. In other words, the network input may be of or have the first data type. In one or more examples, the network input is a 64-channel magnitude FFT input, e.g. where each channel input is of the first data type.

In some examples, the neural network may generate the network output, e.g., based on the transducer input data/network input. In some examples, the network output is provided, such as generated, based on the transducer input data. In other words, in some examples, the neural network is applied to the input transducer data and/or or to the network input, e.g., for provision, such as generation, of the network output. In one or more examples, the network input is based on the input transducer data such as the microphone input data. The network input may be based on transceiver input data from the transceiver module.

In one or more examples, the weight representation comprises an index parameter associated with a weight data structure. In one or more examples, the index parameter is represented by J bits, such as from 2 to 8 bits, e.g. from 4 to 6 bits. In one or more examples J=4. The index parameter may be seen as a parameter indexing a weight in the weight data structure, such as to point to one or more locations of a given weight in the associated weight data structure, such as a look up table, a database, a repository, an array, a stack, a list, a tree, etc.. In one or more examples, the index parameter is a pointer to a particular location in a look up table (LUT). A LUT may be seen as a look up table, for example, an array of data that maps input values to output values.The processor is configured to retrieve, based on the index parameter, the weight from the weight data structure. A weight data structure may be seen as a structure or format for storing, organizing, processing, retrieving data, for example, one or more weights. In one or more examples, the weight data structure may comprise a LUT. The weight is represented by N-bits. N is larger than J. J and N are positive integers. For example, a weight representation indicative of a plurality of weights of a neural network may be retrieved using an index, such as a 4 bits index, to retrieve 8-bits weights in a 16-entry LUT.

Weights or at least some weights of the neural network may have a second data type. The second data type may be different from the first data type. In one or more examples, the first data type has more bits than the second data type. In one or more example hearing devices, the second data type is a fixed point number. The fixed point number can for example be seen as number comprising a fixed point. The fixed point can for example be seen as a fixed radix point and/or a fixed binary point. In some examples, the fixed point number may be seen as a low precision fixed point number. In one or more example methods, the second data type is a fixed point number, such as an 8-bit or 10-bit fixed point number.

The weights for example comprise one or more fixed point numbers. For example, a value of the network in the neural network may be multiplied by a weight, such as by a fixed point number. The weights can for example be seen as comprising one or more fixed point numbers.

In one or more example hearing devices, the weights are N-bit numbers, e.g. where N ≤ 8, e.g. in the range from 4 to 8. The weights can for example be seen as comprising one or more N-bit numbers. The N-bit number can for example be seen as a fixed-point number, e.g., comprising N bits. N may be 4, 5, 6, 7, or 8. In one or more examples, N may be in the range from 8 to 16, and J may be in the range from 2 to 8. In one or more examples, J is less than N.

The N-bit number may for example be a 4-bit number, a 6-bit number 8-bit number, etc. In one or more examples, the number of bits in the second data type is less than the number of bits in the first data type, i.e. N may be less than M. In one or more examples, the difference between M and N is at least three, such as 4 or 8.

In one or more example hearing devices, the processor is configured to load the weight data structure into the memory. In one or more examples, the processor is configured to load (e.g. retrieve and store) the weight data structure, for example, the LUT, into memory before each multiplier in the Multiply-Accumulate (MAC) operation. A MAC operation may be seen according to a standard definition, for example, an operation in signal processing that computes a product of two numbers and adds that product to an accumulator.

In one or more example hearing devices, the index parameter is configured to index the weight in the weight data structure. In one or more examples, the weight data structure (for example, the LUT), comprises the weights indexed by respective index parameters, for example, into a submatrix, as described herein.

In one or more example hearing devices, the weight data structure comprises a look up table (LUT) indexing the weight based on the index parameter. In one or more examples, the LUT may be a 16-byte LUT. In one or more examples, the hearing device may quantize (for example, using a 16 k-means clustering approach) over the entire weight matrix, and then use 4 bits as an index into the 16-entry LUT with 8-bit entries. In one or more examples, 8-bit entries are determined to represent the weights in a storage efficiency manner by using a non-uniform quantization based on the k-means clustering technique. In one or more examples, the LUT may be loaded into memory before each multiplier in the MAC, as described herein. To quantize may be seen as a mathematical approach to convert a large set of values to a smaller set. The quantization from 8-bits to a 4-bits index may be performed using a 4-bit non-uniform quantization.

In one or more example hearing devices, the processor is configured to apply the neural network for provision of a network output based on the transducer input data and the retrieved weight, such as the weight(s) retrieved from the weight data structure.

In one or more example hearing devices, the processor is configured to provide the electrical output signal based on the network output.

In one or more example hearing devices, the weights are N-bit numbers, where N ≤ 8.

In one or more example hearing devices, the index parameter is a J-bit number, where J ≤ 4. In one or more examples, the 4-bit encoding may be used as the index parameter to index the weights into a 16-entry LUT, where each of the 16 entries has an 8 bit encoding.

In one or more example hearing devices, the neural network comprises K-bit multipliers.

In one or more example hearing devices, K ≤ 8. In one or more example hearing devices, the neural network, such as one or more layers of the neural network, comprises K-bit multipliers, e.g. wherein K ≤ 8. In one or more example hearing devices, to load the weight data structure is performed or arranged to be performed before each K-bit multipliers.

In one or more example hearing devices, the neural network is a noise cancelling DNN, an environment classification DNN, or a feedback cancellation DNN. In one or more example hearing devices, the neural network is a noise cancelling DNN, an environment classification DNN, or a feedback cancellation DNN.

Noise cancelling Deep Neural Network, DNN, can be seen as a DNN configured for noise cancellation, such as noise reduction. For example, the noise cancelling DNN may be configured to cancel, such as reduce, noise present in the transducer input data.

Environment classification DNN can be seen as a DNN configured for environment classification. For example, the environment classification DNN may be configured to classify the environment in which the hearing device is located or operating. For example, when the hearing device is in an airplane, the environment classification DNN may be configured to classify the environment as an airplane environment. This may advantageously enable the hearing device to tailor or control other processing, such as one or more of noise cancellation, beamforming, voice pickup, feedback cancellation, and hearing compensation, to the environment in turn providing a hearing device with improved sound quality by improved quality and clarity of the audio output signal provided by the receiver, such as to a user of the hearing device.

Feedback cancellation DNN can be seen as a DNN configured for feedback cancellation, such as feedback reduction. For example, the feedback cancellation DNN may be configured to cancel or reduce feedback present in the transducer input data.

In some examples, processing the transducer input data comprises applying one or more of: the noise cancelling DNN, the environment classification DNN, and the feedback cancellation DNN, such as for provision of a network output based on the transducer input data.

The neural network of the hearing device may for example comprise a recursive neural network (RvNN).

The neural network may be a multilayer neural network. The neural network may comprise one or more fully connected layers. In one or more examples, the neural network comprises a first layer, a second layer, and optionally a third layer. The neural network may comprise at least three layers. The neural network may comprise less than eight layers. In one or more examples, the neural network is a 5-layer, recurrent neural network.

In one or more examples, the neural network is a multi-layer, recurrent neural network.

The neural network may be a recurrent neural network (RNN). The neural network may comprise one or more gated recurrent unit (GRU) layers, such as one or more GRU Type 1 layers and/or one or more GRU Type 2 layers. The neural network may comprise one or more Long short-term memory (LSTM) layers.

In one or more examples, the neural network comprises 2 to 6, such as 3, 4, or 5 GRU layers and optionally a fully connected layer.

The neural network may be defined by the number of layers and/or the number of nodes in each layer. Weights or parameters of a layer can for example be seen as indicative of the strength of a connection between two or more nodes of the neural network.

A layer or layers of the neural network, such as one or more or all of first layer, second layer, third layer, and fourth layer, may be a GRU layer, such as a GRU type-2 layer or a GRU type-1 layer. Each layer of the neural network has an input and an output.

In one or more examples, one or more or all of first layer, second layer, third layer, and fourth layer, comprise one or a plurality of elements applied to the layer input.

A layer, such as one or more or all of first layer, second layer, third layer, and fourth layer of the neural network comprises one or more elements including a first element, optionally a second element, and optionally a third element.

The neural network has weights being applied in the different layers of the neural network. The weights include first weights also denoted w_1_i1, the first weights applied in a first element of one or more layers of the neural network, optionally second weights also denoted w_2_i2, the second weights applied in a second element of one or more layers of the neural network, optionally third weights also denoted w 3_i3, the third weights applied in a third element of one or more layers of the neural network, where i1, i2, i3 are index numbers.

The layer of the neural network can for example be seen as a layer of nodes of the neural network, such as a layer of nodes at a given depth of the neural network.

In one or more example hearing devices, the neural network, such as the first layer and/or the second layer of the neural network, comprises K-bit multipliers, e.g. wherein K ≤ 8. In one or more examples, K is one, two, four, six, or eight. K may be in the range from 4 to 12. In one or more examples, K may be equal to N. In other words, to apply a neural network may comprise, e.g. in a first layer and/or a second layer, to apply or perform an N-bit times an M2-bit multiplication, e.g. where N is the number of bits in a fixed point number and M2 is the number of mantissa bits in a floating point number.

In one or more examples, the first data type is a 12-bit floating point and the second data type is an 8-bit fixed point number. In one or more examples, the first data type is a 16-bit floating point and the second data type is an 8-bit or a 10-bit fixed point number.

In some examples, the weights having a second data type are combined with transducer input data/network input comprising one or more 12-bit floating point numbers, thereby enabling 8-bit multipliers, such as 8 by 8 multipliers, while for example advantageously enabling the provision of network output having a 24-bit dynamic range.

When the floating point number has 12-bits, this may be sufficient to avoid error propagation, but at the same time low enough that full precision can be retained in accumulation of results during the matrix/vector multiplication.

In one or more example hearing devices, the first input transducer is a first microphone for provision of a first microphone input signal as the first transducer input signal.

In one or more example hearing devices, the set of microphones comprises a second input transducer for provision of a second transducer input signal as part of the transducer input data.

A method for providing a weight representation to process transducer input of a hearing device is disclosed. The method is performed by an electronic device. The method comprises obtaining a weight of N-bits. The method comprises generating, based on the weight, a weight representation indicative of weights of a neural network based on transducer input data. In one or more examples, the generating of the weight representation may be encoding the raw data as weight representations (for example, weight representations indicative of weights of a neural network).

Encoding may be seen as reformatting data for efficient transmission or storage. The weight representation comprises an index parameter of J bits. N is larger than J. The method comprises storing, in a weight data structure, the index parameter with the weight.

In one or more example methods, generating the weight representation comprises generating the index parameter.

In one or more example methods, generating the weight representation comprises applying a non-uniform quantization to the weight.

**In** one or more example methods, the non-uniform quantization comprises k-means. In one or more examples, a 16 k-means may be used. In one or more examples the non-uniform quantization is done by computing 16 k-means over the weights in the entire matrix. The 4 bit encodings may be used as indexes into a 16-entry LUT, where the 16-entry LUT comprises sixteen (16) 8 bit entries.

In one or more example methods, storing, in the weight data structure, the index parameter comprises associating the index parameter and the weight in a weight data structure.

In one or more example methods, the index parameter indexes the weight in the weight data structure.

In one or more example methods, the weight is a N-bit number. In one or more example methods, N ≤ 8. In one or more example methods, the index parameter is a J-bit number. In one or more example methods, J ≤ 4. In one or more examples, a 4-bit encoding may serve as an index into a 16-entry LUT with 8 bit entries.

In one or more example methods, the neural network comprises K-bit multipliers.

In one or more example methods, K ≤ 8. In one or more example methods, the weight data structure is loaded before the K- bit multipliers.

A method is disclosed. The method is performed by a hearing device. The hearing device comprises a set of input transducers for provision of transducer input data, the set of input transducers comprising a first input transducer for provision of a first transducer input signal as part of the transducer input data. The hearing device comprises a processor for processing transducer input data and providing an electrical output signal based on the transducer input data. The hearing device comprises a receiver for converting the electrical output signal to an audio output signal. The hearing device comprises a memory having stored thereon a weight representation indicative of a weight of a plurality of weights of a neural network based on the transducer input data. The weight representation comprises an index parameter associated with a weight data structure. The index parameter is represented by J-bits. In one or more examples, the index parameter may be a 4, for example, a 4-bit index may be used as an entry into a 16 byte LUT, as described herein. The method comprises retrieving, based on the index parameter, the weight from the weight data structure. In one or more examples, the weight data structure may comprise a LUT. The weight is represented by N-bits. N is larger than J. J and N are positive integers.

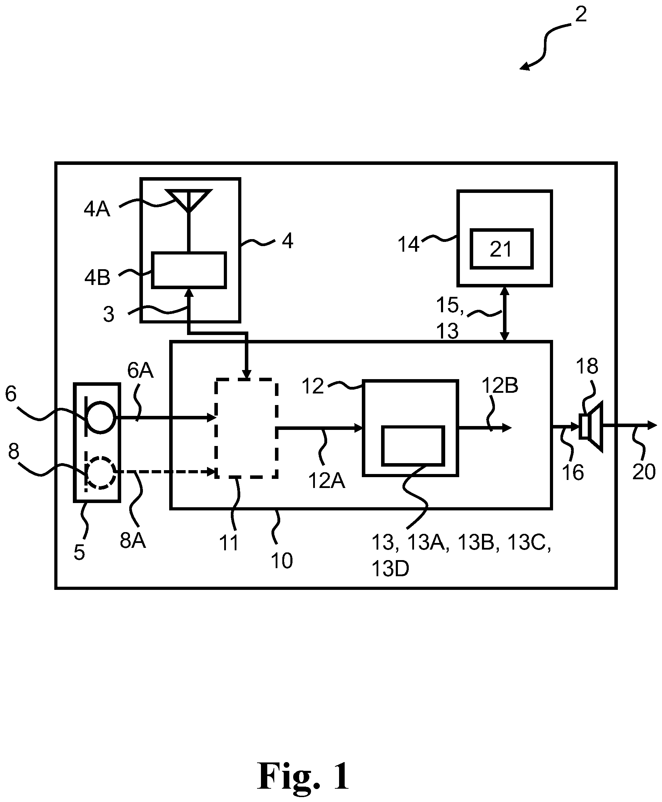

Fig. 1 schematically illustrates an exemplary hearing device 2 according to this disclosure. The hearing device 2 optionally comprises a transceiver module 4 comprising an antenna 4A and a transceiver 4 for wireless communication with one or more external devices, such as a mobile phone and/or another hearing device. The transceiver 4B is for example configured to provide transceiver input data 3 to the processor 10 of the hearing device 2.

The hearing device 2 comprises a set of input transducers 5 for provision of transducer input data, the set of input transducers 5 comprising a first input transducer 6, such as a first microphone, for provision of a first transducer input signal 6A as part of the transducer input data. Optionally, the set of input transducers 5 comprises a second input transducer 8, such as a second microphone, for provision of a second transducer input signal 8A as part of the transducer input data. The hearing device 2 comprises processor 10 for processing transducer input data, such as first transducer input signal 6A and optionally second transducer input signal 8A, and providing an electrical output signal 16 based on the transducer input data. In one or more examples, the hearing device 2 comprises a receiver 18 for converting the electrical output signal 16 to an audio output signal 20. The hearing device 2, such as the processor 10, optionally comprises a pre-processor 11 for transforming input data, such as transducer input data from input transducers 5 and/or transceiver input data from transceiver module 4, to a network input 12A.

The processor 10 is configured to apply a neural network 12 to the network input 12A based on the transducer input data and/or the transceiver input data for provision of a network output 12B based on the network input 12A. The network input 12A is based on the first transducer input data 6A and optionally the second transducer input data 8A, and the electrical output signal 16 is based on the network output 12B. For example, the network output 12B may be used as a control input for processing the input signals 6A, 8B, e.g. in a post-processor (not shown) according to the network output 12B. In one or more examples, the network output 12B may be transformed, e.g. in a post-processor, to form the electrical output signal 16.

The hearing device 2 comprises a memory 14, for example configured to communicate data 15, such as weights 13, with the processor 10 of the hearing device 2. The memory 14 may have stored thereon a weight representation 21 indicative of a weight of a plurality of weights of a neural network based on the transducer input data. In one or more examples, the memory 14 may be configured to store a weight representation 21 indicative of a weight of a plurality of weights 13 of a neural network 12. In one or more examples, the weight representation 21 comprises an index parameter associated with a weight data structure. In one or more examples, the index parameter is represented by J-bits.

The memory 14 may for example be configured to store transducer input data, weights 13, M-bit number, N-bit number, K-bit multiplier, J-bit index parameter and/or the neural network in a part of the memory 14.

In one or more examples, the processor 10 may, for example, be configured to retrieve, based on the index parameter, the weight from the weight data structure. In one or more example, the weight is represented by N-bits, wherein N is larger than J. In one or more examples, J and N are positive integers. In one or more example hearing devices 2, the weights 13 are N-bit numbers, where N ≤ 8.

In one or more example hearing devices 2, the index parameter is a J-bit number, where J ≤ 4. In one or more examples, the 4-bit encoding may be used as the index parameter to index the weights into a 16-entry LUT, where each of the 16 entries has an 8 bit encoding.

In one or more example hearing devices 2, the neural network comprises K-bit multipliers.

In one or more example hearing devices 2, K ≤ 8. In one or more example hearing devices, the neural network, such as one or more layers of the neural network, comprises K-bit multipliers, e.g. wherein K ≤ 8. In one or more example hearing devices, to load the weight data structure is performed or arranged to be performed before each K-bit multipliers.

In one or more example hearing devices 2, the processor 10 is configured to load the weight data structure into the memory 14, e.g. before the K-bit multiplier(s).

In one or more example hearing devices 2, the index parameter is configured to index the weight 13 in the weight data structure.

In one or more example hearing devices 2, the weight data structure comprises a look up table indexing the weight 13 based on the index parameter.

In one or more example hearing devices, the processor is configured to apply the neural network for provision of a network output 12B based on the transducer input data and the retrieved weight, for example one or more of weights 13, 13A, 13B, 13C, 13D. In one or more example, the transducer input data may comprise one or more of the first transducer input signal 8A and the second transducer input signal.

In one or more example hearing devices 2, the processor 10 is configured to provide the electrical output signal 16 based on the network output 12B.

In one or more example hearing devices 2, the neural network 12 is a noise cancelling DNN, an environment classification DNN, or a feedback cancellation DNN.

In one or more example hearing devices 2, the first input transducer 6 is a first microphone for provision of a first microphone input signal as the first transducer input signal 6A.

In one or more example hearing devices 2, the set of microphones comprises a second input transducer 8 for provision of a second transducer input signal 8A as part of the transducer input data.

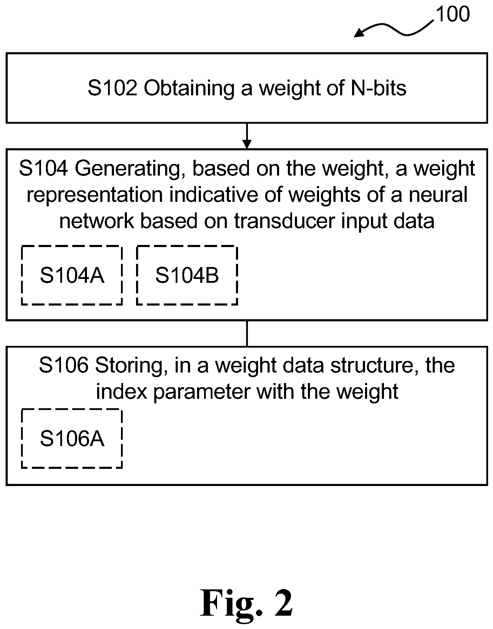

The processor 10 is optionally configured to perform any of the operations disclosed in Fig. 2, such as any one or more of: S102, S104, S106, including S104A, S104B, S106A. The operations of the processor 10 may be embodied in the form of executable logic routines, e.g., lines of code, software programs, etc., that are stored on a non-transitory computer readable medium, e.g., the memory 14, and are executed by the processor 10.

Furthermore, the operations of the hearing device 2 may be considered a method that the hearing device 2 is configured to carry out. Also, while the described functions and operations may be implemented in software, such functionality may as well be carried out via dedicated hardware or firmware, or some combination of hardware, firmware and/or software.

The memory 14 may be one or more of a buffer, a flash memory, a hard drive, a removable media, a volatile memory, a non-volatile memory, a random access memory (RAM), or other suitable device. In a typical arrangement, the memory 14 may include a non-volatile memory for long term data storage and a volatile memory that functions as system memory for the processor 10. The memory 14 may exchange data with the processor 10 over a data bus (not shown). Control lines and an address bus between the memory 14 and the processor 10 also may be present (not shown in Fig. 1). The memory 14 is considered a non-transitory computer readable medium.

Fig. 2 is a flow diagram of an example method 100 for providing a weight representation to process transducer input of a hearing device is disclosed. The method 100 may be performed by a hearing device such as the hearing device 2 of Fig. 1.

A method 100 for providing a weight representation to process transducer input of a hearing device is disclosed. The method 100 is performed by an electronic device. The method 100 comprises obtaining S102 a weight of N-bits. In one or more example methods, the weight is a N-bit number. In one or more example methods, N ≤ 8.

The method 100 comprises generating S104, based on the weight, a weight representation indicative of weights of a neural network based on transducer input data.

The weight representation comprises an index parameter of J bits. In one or more examples, N is larger than J.

The method 100 comprises storing S106, in a weight data structure, the index parameter with the weight.

In one or more example methods, generating S104 the weight representation comprises generating S104A the index parameter.

In one or more example methods, generating S104 the weight representation comprises applying S104B a non-uniform quantization to the weight.

In one or more example methods, the non-uniform quantization comprises k-means.

In one or more example methods, storing S106, in the weight data structure, the index parameter comprises associating S106A the index parameter and the weight in a weight data structure.

In one or more example methods, the index parameter indexes the weight in the weight data structure. In one or more example methods, the index parameter is a J-bit number.

In one or more example methods, J < 4.

In one or more example methods, the neural network comprises K-bit multipliers.

**In** one or more example methods, K ≤ 8.

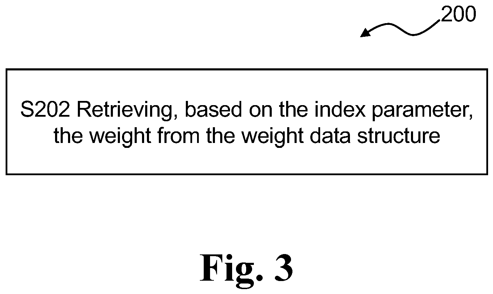

Fig. 3 is a flow diagram of an example method 200 for providing a weight representation to process transducer input, according to the disclosure. The method 200 may be performed by a hearing device such as the hearing device 2 of Fig. 1.

A method 200 is disclosed. The method 200 is performed by a hearing device.

In one or more examples, the hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data.

In one or more examples, the hearing device comprises a receiver for converting the electrical output signal to an audio output signal.

In one or more examples, the hearing device comprises a memory having stored thereon a weight representation indicative of a weight of a plurality of weights of a neural network based on the transducer input data.

In one or more examples, the weight representation comprises an index parameter associated with a weight data structure. In one or more examples, the index parameter is represented by J bits.

In one or more examples, the method 200 comprises retrieving S202, based on the index parameter, the weight from the weight data structure. In one or more examples, the weight is represented by N-bits. In one or more examples, N is larger than J and J and N are positive integers.

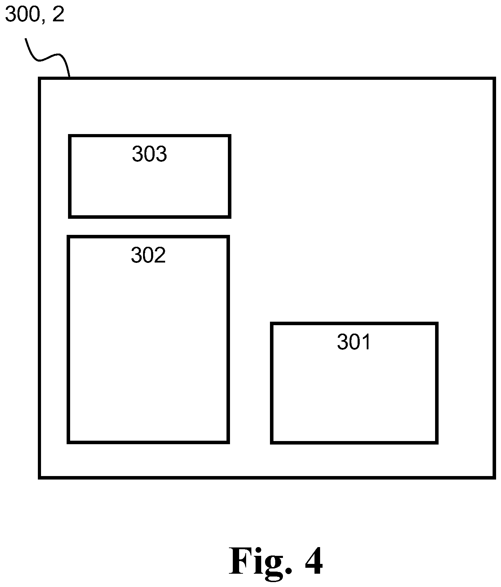

Fig. 4 schematically illustrates one or more example hearing devices 300 according to the disclosure. The hearing device 300 comprises memory circuitry 301, processor circuitry 302, and an interface 303. The interface 303 is configured for wired and/or wireless communications via a wired and/or wireless communication system. The hearing device 300 may be configured to perform any of the processes disclosed in Figs.1, 2, and 3 (e.g., steps S102, S104, S104A, S104B, S106, S106A, S202).

Processor circuitry 302 is optionally configured to perform any of the operations described in relation to Figs. 1-3.

Figs. 5A-5D schematically illustrate one or more example weight representations, according to the disclosed technique. In one or more examples, weight representations, for example, weight representations indicative of a weight of a plurality of weights of a neural network, may be in form of a plurality of matrices. The weights may be represented in a variety of formats depending on the amount of quantization used. For example, Fig. 5A depicts an example of a format wherein weights are stored in a raw format directly in a submatrix order with 8 bits per weight, in other words, in an 8x8 matrix. As depicted at Fig. 5A, rows 504 may store weight representations for WO,0 (for example, weight at location 0,0, or row 0, column 0) through W7,0 (for example, weight at location 7,0, or row 7, column 0). Columns 502 may store weight representations for WO,0 (for example, as above, at weight location 0,0 or row 0, column 0) through WO,7 (for example, weight at location 0,7 or row 0, column 7).

Fig. 5B depicts an example weight representation (e.g. matrix) that has been divided into 4 submatrices. The submatrices are 4x4 matrices, with each comprising 16 elements or weights. Submatrix 1 comprises the elements in the intersection of 508 and 510, and is illustrated with bold number "1". Submatrix 2 comprises the elements in the intersection of 506 and 510, and is labelled with bold number "2". Submatrix 3 comprises the elements in the intersection of 506 and 512, and is labelled with bold number "3". Submatrix 4 comprise the elements in the intersection of 508 and 512, and is labelled with bold number "4".

The 4 submatrices 1-4 are stored in memory in row-major order, a depicted at matrix 514, with each of submatrices 1-4 stored as W1-W4, respectively.

Fig. 5C depicts an example of submatrix storage, according to the disclosure. For example, each submatrix (such as submatrices 1-4 of Fig. 5B), is stored as two 64-bit words representing the upper and lower two rows, respectively, of the submatrix. Fig. 5C depicts an example weight representation (e.g. matrix) for the storage of W1, with the first row representing the top two rows of submatrix 1 of Fig. 5B, and the second row representing the bottom two rows of the submatrix 1 of Fig. 5B.

In one or more examples, the format illustrated in Fig. 5B allows for matrix multiplication by linearly loading both program memory (PMEM), and/or weight, and data memory (DMEM), and/or vector, and/or words. The compute bandwidth may be limited to 8 MAC operations per cycle by the PMEM bandwidth. In one or more examples, the limitation may be due to the system requirements, in that it takes 2 cycles to load a full 4x4 submatrix.

In one or more examples, as described herein, the compute (e.g. computational) bandwidth may be improved by quantizing the weights to 4 bits. In some cases, 4-bit uniform quantization may be used. The present disclosure uses inter alia 4-bit non-uniform quantization that may lead to better performance results of the neural network. In one or more examples, and as disclosed herein, the 4-bit non-uniform quantization is done by computing 16 k-means over the weights in the entire weight matrix, and then using the 4 bits as an index into the 16-entry LUT with 8-bit entries. Such a LUT then needs to be in front of each multiplier in the MAC.

In one or more examples, since 4x16=64, an entire submatrix, such as submatrix "1" of Fig. 5B, may be contained in a single memory cell, using the above-described quantization. Fig. 5D depicts an example of this 16-entry LUT with weight formatting. In one or more examples, the compute bandwidth is increased to 16 MACs. This approach provides simultaneously for a reduction by half in memory consumption and a doubling of the compute bandwidth.

Example hearing devices and methods are disclosed in the following items.

Item 1. A hearing device comprising:
a set of input transducers for provision of transducer input data, the set of input transducers comprising a first input transducer for provision of a first transducer input signal as part of the transducer input data;
a processor for processing the transducer input data and providing an electrical output signal based on the transducer input data;
a receiver for converting the electrical output signal to an audio output signal; and
a memory having stored thereon a weight representation indicative of a weight of a plurality of weights of a neural network based on the transducer input data, wherein the weight representation comprises an index parameter associated with a weight data structure, wherein the index parameter is represented by J-bits;
wherein the processor is configured to:
   - retrieve, based on the index parameter, the weight from the weight data structure, wherein the weight is represented by N-bits, wherein N is larger than J, wherein J and N are positive integers.

Item 2. Hearing device according to Item 1, wherein the processor is configured to load the weight data structure into the memory.

Item 3. Hearing device according to any one of Items 1-2, wherein the index parameter is configured to index the weight in the weight data structure.

Item 4. Hearing device according to any one of Items 1-3, wherein the weight data structure comprises a look up table indexing the weight based on the index parameter.

Item 5. Hearing device according to any one of Items 1-4, wherein the processor is configured to:
apply the neural network for provision of a network output based on the transducer input data and the retrieved weight,
provide the electrical output signal based on the network output.

Item 6. Hearing device according to any one of Items 1-5, wherein the weights are N-bit numbers, where N ≤ 8.

Item 7. Hearing device according to any one of Items 1-6, wherein the index parameter is a J-bit number, where J < 4.

Item 8. Hearing device according to any one of Items 1-7, wherein the neural network comprises K-bit multipliers, wherein K ≤ 8.

Item 9. Hearing device according to any one of Items 1-8 as dependent on Item 2 and 8, wherein to load the weight data structure is performed before each K-bit multipliers.

Item 10. Hearing device according to any of Items 1-9, wherein the neural network is a noise cancelling DNN, an environment classification DNN, or a feedback cancellation DNN.

Item 11. Hearing device according to any of Items 1-10, wherein the first input transducer is a first microphone for provision of a first microphone input signal as the first transducer input signal.

Item 12. Hearing device according to any of Items 1-11, wherein the set of microphones comprises a second input transducer for provision of a second transducer input signal as part of the transducer input data.

Item 13. Method, performed by an electronic device, for providing a weight representation to process transducer input of a hearing device, the method comprising:
obtaining a weight of N-bits;
generating, based on the weight, a weight representation indicative of weights of a neural network based on transducer input data, wherein the weight representation comprises an index parameter of J bits, wherein N is larger than J;
storing, in a weight data structure, the index parameter with the weight.

Item 14. Method according to claim 13, wherein generating the weight representation comprises generating the index parameter.

Item 15. Method according to any of Items 13-14, wherein generating the weight representation comprises applying a non-uniform quantization to the weight.

Item 16. Method according to Item 15, wherein the non-uniform quantization comprises k-means.

Item 17. Method according to any of Items 13-16, wherein storing, in the weight data structure, the index parameter comprises associating the index parameter and the weight in a weight data structure, wherein the index parameter indexes the weight in the weight data structure.

Item 18. Method according to any one of Items 13-17, wherein the weight is a N-bit number, where N ≤ 8.

Item 19. Method according to any one of Items 13-18, wherein the index parameter is a J-bit number, where J ≤ 4.

Item 20. Method according to any one of Items 13-19, wherein the neural network comprises K-bit multipliers, wherein K ≤ 8.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### LIST OF REFERENCES

- 2: hearing device
- 3: transceiver input data
- 4: transceiver module
- 4A: antenna
- 4B: transceiver
- 5: set of input transducers
- 6: first (input) transducer, first microphone
- 6A: first transducer input signal
- 8: second (input) transducer
- 8A: second transducer input signal
- 10: processor
- 11: pre-processor
- 12: neural network
- 12A: network input
- 12B: network output
- 13: weights of neural network
- 13A: first weights of first layer in neural network
- 13B: second weights of second layer in neural network
- 13C: third weights of third layer in neural network
- 13D: fourth weights of fourth layer in neural network
- 14: memory
- 15: data
- 16: electrical output signal
- 18: receiver
- 20: audio output signal
- 100: method of operating a hearing device
- S102: obtaining a weight of N-bits
- S104: generating a weight representation
- S106: storing in a weight data structure, the index parameter with the weight
- 200: method for providing a weight representation
- S202: retrieving, based on the index parameter, the weight from the weight data structure
- 300: hearing device
- 301: hearing device memory circuitry
- 302: hearing device processor circuitry
- 303: hearing device interface
- 502: columns of 8x8 matrix
- 504: rows of 8x8 matrix
- 506: columns of submatrices 1 and 3
- 508: columns of submatrices 2 and 4
- 510: rows of submatrices 1 and 2
- 512: rows of submatrices 3 and 4
- 514: row-major ordered matrix

## Claims

1. A hearing device comprising:
a set of input transducers for provision of transducer input data, the set of input transducers comprising a first input transducer for provision of a first transducer input signal as part of the transducer input data;
a processor for processing the transducer input data and providing an electrical output signal based on the transducer input data;
a receiver for converting the electrical output signal to an audio output signal; and
a memory having stored thereon a weight representation indicative of a weight of a plurality of weights of a neural network based on the transducer input data, wherein the weight representation comprises an index parameter associated with a weight data structure, wherein the index parameter is represented by J-bits;
wherein the processor is configured to:
- retrieve, based on the index parameter, the weight from the weight data structure, wherein the weight is represented by N-bits, wherein N is larger than J, wherein J and N are positive integers.

2. Hearing device according to claim 1, wherein the processor is configured to load the weight data structure into the memory.

3. Hearing device according to any one of the previous claims, wherein the index parameter is configured to index the weight in the weight data structure.

4. Hearing device according to any one of the previous claims, wherein the weight data structure comprises a look up table indexing the weight based on the index parameter.

5. Hearing device according to any one of the previous claims, wherein the processor is configured to:
apply the neural network for provision of a network output based on the transducer input data and the retrieved weight,
provide the electrical output signal based on the network output.

6. Hearing device according to any one of the previous claims, wherein the weights are N-bit numbers, where N ≤ 8, and the index parameter is a J-bit number, where J ≤ 4.

7. Hearing device according to any one of the previous claims as dependent on claim 2 and 8, wherein the neural network comprises K-bit multipliers, wherein K ≤ 8, and wherein to load the weight data structure is performed before each K-bit multipliers.

8. Hearing device according to any of the previous claims, wherein the first input transducer is a first microphone for provision of a first microphone input signal as the first transducer input signal.

9. Method, performed by an electronic device, for providing a weight representation to process transducer input of a hearing device, the method comprising:
obtaining a weight of N-bits;
generating, based on the weight, a weight representation indicative of weights of a neural network based on transducer input data, wherein the weight representation comprises an index parameter of J bits, wherein N is larger than J;
storing, in a weight data structure, the index parameter with the weight.

10. Method according to claim 9, wherein generating the weight representation comprises generating the index parameter.

11. Method according to any of claims 9-10, wherein generating the weight representation comprises applying a non-uniform quantization to the weight.

12. Method according to claim 11, wherein the non-uniform quantization comprises k-means.

13. Method according to any of claims 9-12, wherein storing, in the weight data structure, the index parameter comprises associating the index parameter and the weight in a weight data structure, wherein the index parameter indexes the weight in the weight data structure.

14. Method according to any one of claims 9-13, wherein the weight is a N-bit number, where N ≤ 8, and the index parameter is a J-bit number, where J ≤ 4.

15. Method according to any one of claims 9-14, wherein the neural network comprises K-bit multipliers, wherein K ≤ 8.
